# EUROPÄISCHE PATENTANMELDUNG

(11) **EP 2 551 452 A2**
(43) Veröffentlichungstag der Anmeldung: **30.01.2013**
(21) Anmeldenummer: 12170545.3
(22) Anmeldetag: 01.06.2012
(51) Int. Cl.: F01D 5/02, F01D 5/04

(54) **Verfahren zum Verbinden zweier Bauteile mittels eines Magnetumformungsverfahrens und dessen Verwendung sowie Bauteileverbund**

(30) Priorität: 29.07.2011 DE 102011080117
(71) Anmelder: ROBERT BOSCH GMBH, 70442 Stuttgart (DE)
(72) Erfinder: Ramsayer, Reiner, 71701 Schwieberdingen (DE); Burghardt, Andreas, 70176 Stuttgart (DE); Matic, Mario, 70825 Korntal-Muenchingen (DE)

(57) **Zusammenfassung**

Die Erfindung betrifft ein Verfahren zum Verbinden zweier Bauteile (1; 1a, 2; 2a) mittels eines Magnetumformungsverfahrens. Erfindungsgemäß ist es vorgesehen, dass bei wenigstens einem der beiden Bauteile (1; 1 a) eine Formschlussgeometrie (15) ausgebildet ist, mittels der die beiden Bauteile (1; 1 a, 2; 2a) nach dem Verbinden zueinander festgesetzt sind, und dass zumindest eines der Bauteile (2; 2a) aus einem nicht schweißfähigen Material, insbesondere aus TiAl besteht.

## Beschreibung

### Stand der Technik

Die Erfindung betrifft ein Verfahren zum Verbinden zweier Bauteile mittels eines Magnetumformungsverfahrens nach dem Oberbegriff des Anspruchs 1. Ferner betrifft die Erfindung eine Verwendung des erfindungsgemäßen Verfahrens sowie einen Bauteileverbund zum Durchführen des erfindungsgemäßen Verfahrens.

Ein derartiges Verfahren ist als sogenanntes "Magnetimpuls-Schweißverfahren" bereits dem Fachmann bekannt und dient dazu, zwei, insbesondere konzentrisch zueinander angeordnete Bauteile durch einen Kaltschweißprozess miteinander zu verbinden. Dabei wird insbesondere das ein inneres Bauteil umgebende äußere Bauteil über eine Spulenanordnung gegen das innere Bauteil beschleunigt, wobei bei der Kollision des äußeren Bauteils mit dem inneren Bauteil die angesprochene Kaltschweißverbindung ausgebildet wird.

Darüber hinaus ist beispielsweise aus der DE 10 2008 059 617 A1 ein Rotor für einen Abgasturbolader bekannt. Ein derartiger Rotor (der auch als Laufrad bezeichnet wird) ist dabei insbesondere einer relativ hohen Temperaturbelastung durch das Abgas einer Brennkraftmaschine ausgesetzt. Daher ist es auch bekannt, besonders wärmeunempfindliche Materialien für das Laufrad des Abgasturboladers einzusetzen, beispielsweise TiAl. Ein derartiges Laufrad ist darüber hinaus auf der Welle des Abgasturboladers drehfest angeordnet. Während es aus dem Stand der Technik bekannt ist, eine derartige Verbindung zwischen einem Laufrad eines Abgasturboladers und dessen Welle durch eine Schweißverbindung herzustellen, ist ein derartiges Verbindungsverfahren bei aus einem nicht schweißbaren Material bestehenden Laufrad, insbesondere bei einem Laufrad aus TiAl, nicht möglich.

### Offenbarung der Erfindung

Ausgehend von dem dargestellten Stand der Technik liegt der Erfindung die Aufgabe zugrunde, ein Verfahren zum Verbinden zweier Bauteile mittels eines Magnetumformungsverfahrens derart weiterzubilden, dass dieses insbesondere auch für die Verwendung von Bauteilen von Abgasturboladern geeignet ist, bei denen der Rotor bzw. das Laufrad aus einem nicht schweißfähigen Material besteht. Diese Aufgabe wird mittels eines Verfahrens mit den Merkmalen des Anspruchs 1 gelöst. Das erfindungsgemäße Verfahren sieht vor, dass bei wenigstens einem der beiden Bauteile eine Formschlussgeometrie ausgebildet ist, mittels der die beiden Bauteile nach dem Verbinden zueinander festgesetzt sind, und dass zumindest eines der Bauteile aus einem nicht schweißfähigen Material, insbesondere aus TiAl besteht. Das aus nicht schweißfähigem Material bestehende Bauteil kann dabei insbesondere, bei dem Einsatz in den Abgasturbolader, als Rotor bzw. Laufrad des Abgasturboladers ausgebildet sein. Durch das Magnetumformungsverfahren wird dabei der Vorteil erzielt, dass die beiden Bauteile auch ohne die Ausbildung einer Schmelzphase miteinander verbunden werden können.

Vorteilhafte Weiterbildungen des erfindungsgemäßen Verfahrens zum Verbinden zweier Bauteile mittels eines Magnetumformungsverfahrens sind in den Unteransprüchen aufgeführt. In den Rahmen der Erfindung fallen sämtliche Kombinationen aus zumindest zwei von in den Ansprüchen, der Beschreibung und/oder den Figuren offenbarten Merkmalen.

In einer ersten, bevorzugten Ausgestaltung der Erfindung ist es vorgesehen, dass beim Verbinden der beiden Bauteile wenigstens ein erster Teilbereich eines der beiden Bauteile im Bereich der Formschlussgeometrie vollständig ausgetrennt wird. Dadurch lassen sich besonders feste Verbindungen zwischen den beiden Bauteilen herstellen, da beispielsweise die Fügegeometrie des einen Bauteils (z.B. in Form von Erhebungen oder ähnlichem) in Aussparungen des zweiten Bauteils vollständig hineinragen, so dass ein Festsetzen des zweiten Bauteils am ersten Bauteil in alle Richtungen ermöglicht wird.

Bei einem weiteren bevorzugten Verfahren kann es vorgesehen sein, dass beim Verbinden der beiden Bauteile wenigstens ein zweiter Teilbereich eines der beiden Bauteile im Bereich der Formschlussgeometrie verformt wird. Im Gegensatz zum gerade beschriebenen Verfahren verbleibt der zweite Teilbereich somit an dem Bauteil, so dass der beispielsweise abstehende zweite Teilbereich im Zusammenhang mit der Formschlussgeometrie den Halt des zweiten Bauteils an dem ersten Bauteil ermöglicht.

Eine weitere vorteilhafte Ausgestaltung der Erfindung sieht vor, dass wenigstens eines der Bauteile vor oder während des Fügevorgangs einer Temperaturbehandlung unterzogen, insbesondere erwärmt wird. Mittels einer derartigen Temperaturbehandlung lassen sich beispielsweise die erforderlichen Kräfte zum Ausbilden der Verbindung zwischen den beiden Bauteile vermindern, indem das zu deformierende Bauteil durch die Wärmebehandlung eine geringere Härte aufweist. Darüber hinaus lassen sich durch eine derartige Temperaturbehandlung auch gezielt Eigenschaften des zweiten Bauteils beeinflussen, die eine vorteilhafte Verbindung der beiden Bauteile ermöglichen.

Die Erfindung umfasst auch einen Bauteileverbund zum Durchführen eines erfindungsgemäßen Verfahrens, wobei an wenigstens einem des aus zwei Bauteilen bestehenden Bauteileverbunds eine Formschlussgeometrie ausgebildet ist, und wobei wenigstens eines der beiden Bauteile aus einem nicht schweißfähigen Material, insbesondere aus TiAl besteht, wobei es erfindungsgemäß vorgesehen ist, dass die beiden Bauteile im Querschnitt im Wesentlichen rund ausgebildet und konzentrisch zueinander angeordnet sind. Mittels einer derartigen Ausbildung lässt sich eine besonders feste Verbindung der beiden Bauteile des Bauteileverbunds erzielen, da eine relativ große Kontaktfläche zwischen den beiden Bauteilen als Fügefläche zur Verfügung steht.

Ganz besonders bevorzugt ist es, dass das eine Bauteil eine Achse oder Welle mit einer am Außenumfang ausgebildeten, durch wenigstens eine Erhebung gekennzeichnete Formschlussgeometrie ist. Dadurch lässt sich die erforderliche Formschlussgeometrie mit relativ geringem Aufwand herstellen, da beispielsweise die Formschlussgeometrie am Außenumfang der Achse oder Welle mittels eines Werkzeuges sehr leicht erreichbar bzw. bearbeitbar ist.

Zur Vereinfachung des Fügevorgangs bzw. zur Reduzierung der erforderlichen Kräfte beim Magnetumformungsverfahren ist es darüber hinaus in einer weiteren bevorzugten Ausgestaltung der Erfindung vorgesehen, dass das die Achse oder Welle umgebende Bauteil im Bereich der Formschlussgeometrie wenigstens einen geschwächten Bereich aufweist, insbesondere durch eine zumindest reduzierte Wanddicke im Bereich des geschwächten Bereichs.

Ganz besonders bevorzugt ist eine Ausgestaltung, bei der der geschwächte Bereich in Form eines Schlitzes ausgebildet ist. Dadurch lässt sich der geschwächte Bereich besonders einfach und definiert herstellen.

Durch die Ausbildung der Formschlussgeometrie in Form einer im Querschnitt keil- oder rechteckförmigen Erhebung wird eine sichere Befestigung des äußeren Bauteils relativ zum inneren Bauteil ermöglicht.

Ganz besonders bevorzugt ist die Verwendung eines erfindungsgemäßen Verfahrens zur Verbindung zweier Bauteile eines Abgasturboladers, insbesondere eines Abgasturboladers in einem Kraftfahrzeug, vorzugsweise zur Verbindung einer Achse und eines Laufrades. Dadurch wird es ermöglicht, das Laufrad aus einem besonders hitzefähigen Material, beispielsweise TiAl herzustellen, welches an sich nicht schweißfähig ist.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: einen Teillängsschnitt durch eine Einrichtung zum Verbinden zweier Bauteile mittels eines Magnetumformungsverfahrens, wobei das eine Bauteil als Welle, und das andere Bauteil als ein die Welle konzentrisch umgebendes Rohr ausgebildet ist,
- Fig. 2: die Anordnung der beiden Bauteile gemäß Fig. 1 nach dem Fügevorgang,
- Fig. 3: eine Draufsicht auf die gemäß Fig. 1 und 2 verwendete Welle,
- Fig. 4: einen Teillängsschnitt durch einen gegenüber den Fig. 1 und 2 geänderten Bauteileverbund nach dem Fügen der beiden Bauteile des Bauteileverbunds und
- Fig. 5: eine Draufsicht auf den Bauteileverbund nach dem Fügen der beiden Bauteile im Bereich einer Erhebung.

Gleiche Bauteile bzw. Bauteile mit gleicher Funktion sind in den Figuren mit den gleichen Bezugsziffern versehen.

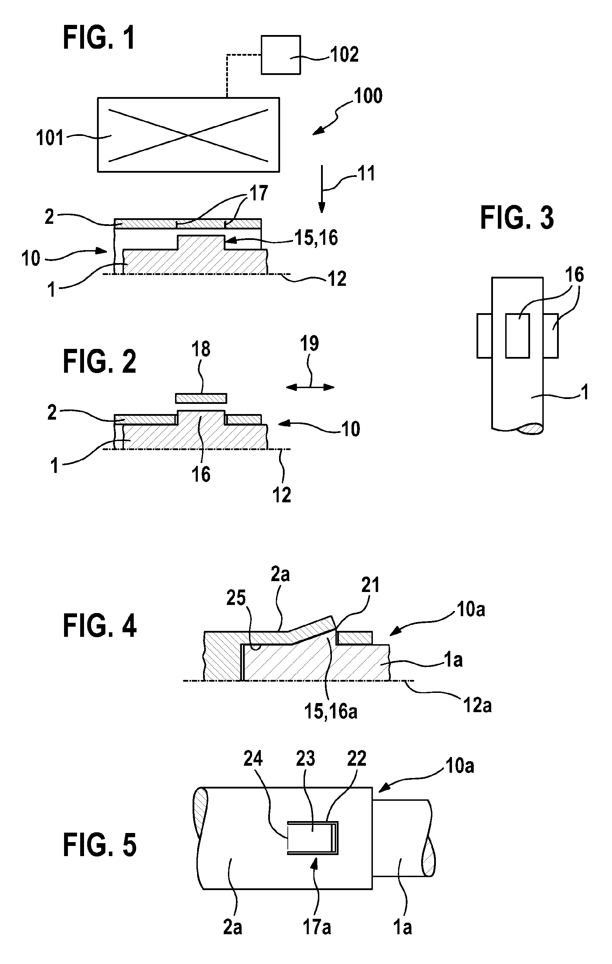

In der Fig. 1 sind im Teillängsschnitt zwei Bauteile 1, 2 eines Bauteileverbunds 10 dargestellt, die miteinander verbunden werden sollen. Hierzu dient eine in der Fig. 1 lediglich stark vereinfachte dargestellte Einrichtung 100, die zur Durchführung eines sogenannten Magnetumformungsverfahrens geeignet ist. Die Einrichtung 100 umfasst dabei eine Magnetspulenanordnung 101, die mit einer Vorrichtung 102 zum Erzeugen eines Stromimpulses gekoppelt ist. Durch die Einrichtung 100 wird in der Magnetspulenanordnung 101 ein magnetischer Impuls erzeugt, der zu einer Beschleunigung des in Bezug auf das Bauteil 1 radial außen liegenden Bauteils 2 in Richtung auf das Bauteil 1 (Pfeil 11) führt. Insbesondere ist es dazu sinnvoll bzw. erforderlich, dass der Bauteileverbund 10 mit seiner Längsachse 12 mit der Längsachse der Magnetspulenanordnung 101 ausgerichtet ist.

Die Bauteile 1 und 2 sind insbesondere Bestandteil eines in den Figuren im Einzelnen nicht näher dargestellten Abgasturboladers, wobei das Bauteil 1 als Achse oder Welle ausgebildet ist, während das Bauteil 2 in dem dargestellten Teilbereich rohrförmig ausgebildet ist. Vorzugsweise ist das Bauteil 2 als Rotor bzw. Laufrad des Abgasturboladers ausgebildet, wobei das Bauteil 2 aus einem besonders hitzebeständigen Material, insbesondere aus TiAl besteht. Demgegenüber besteht das Bauteil 1 beispielsweise aus Stahl. Die beiden Bauteile 1, 2 sind in dem dargestellten Fügebereich der beiden Bauteile 1, 2 konzentrisch zueinander angeordnet. Das Bauteil 1 weist an seinem Außenumfang, vorzugsweise in gleichgroßen Winkelabständen, eine Fügegeometrie 15 auf, die beispielhaft vier, im Querschnitt jeweils rechteckförmige Erhebungen 16 umfasst.

Vorzugsweise ist es vorgesehen, dass das Bauteil 2 in Ausrichtung mit den Erhebungen 16 Schwächungsbereiche 17 aufweist, die beispielsweise durch ein teilweises Ausstanzen im Bereich der Umrisse der Erhebungen 16 oder durch eine Reduzierung der Wanddicke des rohrförmigen Bauteils 2 im Bereich der Erhebungen 16 ausgebildet wird.

In der Fig. 2 ist der Zustand dargestellt, bei dem die Bauteile 1, 2 miteinander verbunden sind. Hierbei erkennt man, dass das radial äußere Bauteil 2 in dem Bereich außerhalb der Erhebungen 16 an dem Außenumfang des radial inneren Bauteils 1 dicht anliegt. Ferner erkennt man, dass durch die Schwächungsbereiche 17 begrenzte erste Teilbereiche 18 des Bauteils 2 beim Fügen der Bauteile 1, 2 herausgetrennt wurden, so dass sich zwischen den beiden Bauteilen 1, 2 im Bereich zwischen den Erhebungen 16 um die Schwächungsbereiche 17 ein Formschluss ergibt, der eine axiale Verschiebung des äußeren Bauteils 2 in Richtung des Doppelpfeils 19 sowie eine radiale Verdrehung des äußeren Bauteils 2 zum inneren Bauteil 1 verhindert.

In den Fig. 4 und 5 ist ein modifizierter Bauteileverbund 10a dargestellt. Dabei weist das Bauteil 1a im Querschnitt keilförmige Erhebungen 16a als Formschlussgeometrie 15 auf, die an einer senkrecht zur Längsachse 12a verlaufenden Ebene eine Schneidkante 21 ausbilden. Das äußere, eine Sacklochbohrung 25 aufweisende Bauteil 2a weist in Ausrichtung und Überdeckung mit den Erhebungen 16a Schwächungsbereiche 17a in Form von U-förmigen Ausstanzungen 22 auf. Wesentlich dabei ist, dass die von den Ausstanzungen 22 begrenzten zweiten Teilbereiche 23 über eine Kante 24 an dem äußeren Bauteil 2a angelenkt sind. Wie insbesondere anhand der Fig. 4 erkennbar ist, sind die angesprochenen Schwächungsbereiche 17a auch nach dem Ausbilden der Verbindung zwischen den beiden Bauteilen 1a, 2a weiterhin an dem Bauteil 2a angeformt bzw. angelenkt.

Zur Vereinfachung bzw. Erleichterung des Fügeprozesses zwischen den beiden Bauteilen 1, 2 bzw. 1a, 2a kann es vorgesehen sein, dass wenigstens eines der Bauteile 1, 2 bzw. 1a, 2a, insbesondere das äußere Bauteil 2, 2a vor bzw. während des Fügeprozesses einer Temperaturbehandlung, insbesondere einer Erwärmung unterzogen wird.

Darüber hinaus liegt es im Rahmen der Erfindung, die Geometrie der Bauteile 1, 2 bzw. 1a, 2a beliebig zu verändern. Insbesondere kann es auch vorgesehen sein, dass das Bauteil 2, 2a eine Formschlussgeometrie aufweist, oder aber, dass beide Bauteile 1, 1a, 2, 2a mit einer Formschlussgeometrie ausgestattet sind. Wesentlich ist lediglich, dass wenigstens eines der beiden Bauteile 1, 2 bzw. 1a, 2a aus einem nicht schweißfähigen Material, insbesondere aus TiAl besteht.

## Patentansprüche

1. Verfahren zum Verbinden zweier Bauteile (1; 1a, 2; 2a) mittels eines Magnetumformungsverfahrens,
**dadurch gekennzeichnet,**
**dass** bei wenigstens einem der beiden Bauteile (1; 1a) eine Formschlussgeometrie (15) ausgebildet ist, mittels der die beiden Bauteile (1; 1a, 2; 2a) nach dem Verbinden zueinander festgesetzt sind, und dass zumindest eines der Bauteile (2; 2a) aus einem nicht schweißfähigen Material, insbesondere aus TiAl besteht.

2. Verfahren nach Anspruch 1,
**dadurch gekennzeichnet,**
**dass** beim Verbinden der beiden Bauteile (1; 1a, 2; 2a) wenigstens ein erster Teilbereich (18) eines der Bauteile (2) im Bereich der Formschlussgeometrie (15) vollständig ausgetrennt wird.

3. Verfahren nach Anspruch 1 oder 2,
**dadurch gekennzeichnet,**
**dass** beim Verbinden der beiden Bauteile (1 a, 2a) wenigstens ein zweiter Teilbereich (23) eines der Bauteile (2a) im Bereich der Formschlussgeometrie (15) verformt wird, wobei ein Abschnitt (22) des zweiten Teilbereichs (23) am Bauteil (2a) verformt wird.

4. Verfahren nach einem der Ansprüche 1 bis 3,
**dadurch gekennzeichnet,**
**dass** wenigstens eines der Bauteile (1; 1 a, 2; 2a) vor oder während des Fügevorgangs einer Temperaturbehandlung unterzogen, insbesondere erwärmt wird.

5. Bauteileverbund (10; 10a) zum Durchführen eines Verfahrens nach einem der Ansprüche 1 bis 4, wobei an wenigstens einem des aus zwei Bauteilen (1; 1a, 2; 2a) bestehenden Bauteileverbunds (10; 10a) eine Formschlussgeometrie (15) ausgebildet ist, und wobei wenigstens eines der beiden Bauteile (1; 1a, 2; 2a) aus einem nicht schweißfähigen Material, insbesondere aus TiAl besteht,
**dadurch gekennzeichnet,**
**dass** die beiden Bauteile (1; 1a, 2; 2a) im Querschnitt im Wesentlichen rund ausgebildet und konzentrisch zueinander angeordnet sind.

6. Bauteileverbund nach Anspruch 5,
**dadurch gekennzeichnet,**
**dass** das eine Bauteil (1; 1a) eine Achse oder Welle mit einer am Außenumfang ausgebildeten, durch wenigstens eine Erhebung (16; 16a) gekennzeichnete Formschlussgeometrie (15) ist.

7. Bauteileverbund nach Anspruch 6,
**dadurch gekennzeichnet,**
**dass** das die Achse oder Welle umgebende Bauteil (2; 2a) im Bereich der Formschlussgeometrie (15) wenigstens einen geschwächten Bereich (17; 17a) aufweist, insbesondere durch eine zumindest reduzierte Wanddicke im Bereich des geschwächten Bereichs (17; 17a).

8. Bauteileverbund nach Anspruch 7,
**dadurch gekennzeichnet,**
**dass** der geschwächte Bereich (17a) in Form einer Ausstanzung (22) ausgebildet ist.

9. Bauteileverbund nach einem der Ansprüche 6 bis 8,
**dadurch gekennzeichnet,**
**dass** die Erhebung (16; 16a) im Querschnitt keil- oder rechteckförmig ausgebildet ist.

10. Verwendung eines Verfahrens nach einem der Ansprüche 1 bis 4 zur Verbindung zweier Bauteile (1; 1a, 2; 2a) eines Abgasturboladers, insbesondere eines Abgasturboladers in einem Kraftfahrzeug, vorzugsweise zur Verbindung einer Achse (1; 1a) und eines Laufrades (2; 2a).
